# EUROPÄISCHE PATENTSCHRIFT

(11) **EP 2 175 263 B1**
(45) Veröffentlichungstag und Bekanntmachung des Hinweises auf die Patenterteilung: **29.04.2015**
(21) Anmeldenummer: 09172523.4
(22) Anmeldetag: 08.10.2009
(51) Int. Cl.: G01N 25/60

(54) **Dampfgütesensor und Verfahren zur Dampfgütebestimmung**
Steam quality sensor and method for determining steam quality
Capteur de marchandises à vapeur et procédé de détermination de marchandises à vapeur

(30) Priorität: 10.10.2008 DE 102008042750
(43) Veröffentlichungstag der Anmeldung: 14.04.2010
(73) Patentinhaber: Robert Bosch GmbH, 70442 Stuttgart (DE)
(72) Erfinder: Rixecker, Georg, 70771, Leinfelden-Echterdingen (DE); Hasenkox, Ulrich, 71254, Ditzingen (DE); Schnell, Frank, 70806, Kornwestheim (DE); Schmidt, Ralf, 70839, Gerlingen (DE)

(56) Entgegenhaltungen:
- EP-A1- 1 422 137
- EP-A2- 0 285 918
- DE-A1-102006 032 549
- US-A- 2 970 475

## Beschreibung

Die vorliegende Erfindung betrifft einen Dampfgütesensor gemäß der in Patentanspruch 1 näher definierten Art. Darüber hinaus ist auch ein Verfahren zur Dampfgütebestimmung gemäß Patentanspruch 9 Gegenstand der vorliegenden Erfindung.

### Stand der Technik

In der Automobilindustrie ist die Senkung der CO₂-Emissionen ein zentrales Thema. Es sind verschiedene Szenarien bekannt, wie Abwärme beispielsweise aus dem Abgastrakt zurück gewonnen und dem Antriebsstrang wieder zugeführt werden kann. Eine Variante ist die Dampferzeugung in einem Abgaswärmetauscher und die Wandlung der im überhitzten Dampf, wie zum Beispiel bei ca. 400°C und ca. 40 bar, enthaltenen Energie über einen Dampfturbolader oder Generator in mechanische oder elektrische Energie. Das System soll für den Fahrzeugeinsatz äußerst robust ausgelegt sein, weshalb die Qualität des Dampfes überwacht werden muss. Es ist sicherzustellen, dass auch in der Anlaufphase des Systems mit dem Dampf keine Wassertröpfchen mitgerissen werden, die zu Erosionseffekten und damit zu Verschleiß in der Dampfturbine führen würden.

Der Sensor muss aber den betriebsgemäßen Anforderungen von 40 bar und 400°C standhalten.

Ein Ausblenden von Wassertröpfchen vor der Turbine über Impaktoren ist nicht erwünscht, da eine derartige Impaktorstufe einen zusätzlichen Gegendruck im System erzeugen würde.

Aus Haushaltgeräten wie Dunstabzugshauben und Bügeleisen sind Dampfsensoren bekannt, die allerdings dazu ausgelegt sind, den Dampf als solchen zu erkennen und nicht, Tröpfchen im Dampf festzustellen. Derartige Sensoren basieren meist auf einem Elektrodensystem, zwischen dem ein feuchtigkeitsempfindliches Material eingebettet ist. Unter Dampfeinwirkung verändern sich Leitfähigkeit, Kapazität etc., was über die Elektroden detektiert werden kann.

Auch die DE 10 2006 015 384 A1 beschreibt eine Vorrichtung zur Temperatursensierung in einem Fluid, insbesondere ein partikelbehaftetes Abgasfluid eines Verbrennungsvorgangs in einem Kraftfahrzeugmotor, und damit einen fahrzeugtauglichen Temperatursensor. Die DE 10 2006 032 549 A1 beschreibt einen Gas- bzw. Partikelsensor, bei dem der sensitive Bereich innerhalb einer Durchbrechung angeordnet ist. Ein Heizelement kann auch vorgesehen sein. Eine Detektion von Tröpfchen im Dampf ist jedoch nicht beschrieben.

Die EP 1 422 137 A1 offenbart einen Vereisungssensor für Flugzeuge.

Die EP 0 285 918 A2 offenbart ein Dampfgütemessinstrument für Kraftwerke.

### Offenbarung der Erfindung

Der erfindungsgemäße Dampfgütesensor gemäß Anspruch 1, mit welchem das ebenfalls erfindungsgemäße Verfahren gemäß Anspruch 9 durchgeführt werden kann, hat gegenüber dem Stand der Technik den Vorteil, dass er im Dampf vorhandene Tröpfchen erkennt. Zudem ist er durch seinen Aufbau geeignet, auch unter den extremen Bedingungen in der Kraftfahrzeugtechnik, beispielsweise in Bezug auf die hohen Temperaturen und Drücke im überkritischen Dampf von Dampfturboladern, zuverlässig einsetzbar zu sein.

Weiterhin ist vorteilhaft, dass der Dampfgütesensor sowohl eine sehr gute Detektion von Tröpfchen in einem Dampf gewährleistet als auch insbesondere einen einfachen Aufbau aufweist und zugleich als Temperatursensor eingesetzt werden kann. Dadurch kann der Dampfgütesensor der vorliegenden Erfindung sowohl beispielsweise in der Startphase der Dampfturbine zur Dampfgüteprüfung eingesetzt werden als auch im späteren Dauerbetrieb als Temperatursensor Weitere Vorteile und vorteilhafte Ausgestaltungen des erfindungsgemäßen Gegenstandes sind der Beschreibung, den Beispielen und den Patentansprüchen zu entnehmen.

Es wurde gefunden, dass durch ein Erhitzen des keramischen Sensorelements auf eine Temperatur leicht über der Dampftemperatur zu einer ausgezeichneten Erkennung von möglicherweise im Dampf enthaltenen Tröpfchen beiträgt.

Gegenstand der vorliegenden Erfindung ist daher ein Dampfgütesensor zur Detektion von Tröpfchen in einer Dampfphase enthaltend ein keramisches Sensorelement mit wenigstens einer Temperaturmessvorrichtung und mindestens einer Heizvorrichtung, die **dadurch gekennzeichnet** ist, dass das keramische Sensorelement durch die Heizvorrichtung über die Dampftemperatur der zu detektierenden Tröpfchen erhitzbar ist.

Ist der Dampf homogen, führt dies zu einer gleichbleibenden Temperatur des keramischen Sensorelements und die Temperaturmessvorrichtung misst einen konstanten Wert. Treten jedoch Tröpfen im Dampf auf, führt deren Auftreffen auf die Oberfläche des Sensorelements zu einer leichten Abkühlung des Sensorelements, da die Tröpfchen auf der Oberfläche des Elements verdampft werden. Dadurch wird dem Element die notwendige Verdampfungswärme entzogen. Für Wasser beträgt sie bei 100°C und 1013 mbar beispielsweise 2,26 MJ/kg. Dieser Abkühlungseffekt durch auftreffende und wieder verdampfte Tröpfchen kann durch die bevorzugt mit der an der Oberfläche des Sensorelements befindlichen Temperaturmesseinrichtung detektiert werden. Die Größenordnung der Temperaturerniedrigung durch die auftreffenden und wieder verdampften Tröpfchen liegt bei ca. 2 K bis 4 K und ist abhängig von der Tröpfchengröße, der Wärmekapazität des Keramikmaterials des Sensorelements und der Dampftemperatur sowie dem Dampfdruck.

Im Rahmen einer bevorzugten Ausführungsform kann das keramische Sensorelement eine Schichtstruktur aufweisen.

Das Sensorelement kann bevorzugt stabförmig mit rundem oder rechteckigem Querschnitt ausgebildet sein, wobei eine Grundschicht aus einem isolierenden oder leitfähigen keramischen Grundmaterial, eine weitere Schicht mit Heizvorrichtung und mindestens eine Schicht mit Temperaturmessvorrichtung vorgesehen sind. Wird als Grundmaterial eine isolierende Keramik verwendet, so kann eine Schichtenfolge mit Isolationsschicht, Heizschicht, Grundschicht, Temperaturmessvorrichtung und oberer Isolationsschicht für den Dampfgütesensor gemäß der vorliegenden Erfindung eingesetzt werden. Die untere und obere Isolationsschicht dienen dem Schutz vor Verfälschung des Messsignals durch Wasserdampf. Unter Umständen kann auf diese Isolationsschichten verzichtet werden. Zusätzlich kann auch zum mechanischen Schutz ein Schutzrohr vorgesehen werden.

Im Rahmen einer weiteren bevorzugten Ausführungsform kann sich die Temperaturmesseinrichtung an der Oberfläche des Sensorelements befinden.

In einer weiteren bevorzugten Ausführungsform der vorliegenden Erfindung kann das keramische Sensorelement aus einem hochtemperaturstabilen und hydrothermal beständigen Material bestehen.

Bevorzugt ist das Material ausgewählt aus der Gruppe der Silikate, Aluminiumoxid, Siliziumcarbid, Quarzglas, Siliziumnitird, Aluminiumnitrid, Zirkonoxid und LTCC.

Im Allgemeinen sind Materialien mit kleiner Wärmekapazität bevorzugt. Als Beispiele für geeignete silikatische Materialien können Mullit oder Codierit eingesetzt werden.

Weiterhin bevorzugt kann die Heizvorrichtung gegenüber dem keramischen Sensorelement elektrisch isoliert sein. Die elektrische Isolation kann dabei beispielsweise durch Umschließen der Heizvorrichtung mit Aluminiumoxid erzielt werden.

Da einige der möglichen Sensormaterialien elektrisch leitfähig sein können oder bei den beabsichtigten Dampftemperaturen elektrisch leitfähig werden können, muss in diesem Fall eine elektrische Isolation der Heizvorrichtung gegenüber der Sensorkeramik vorgesehen werden. Beispielsweise ist yttriumstabilisiertes Zirkonoxid bei höheren Temperaturen ab ca. 300°C ein Ionenleiter.

Im Rahmen einer bevorzugten Ausführungsform kann das Material der Heizvorrichtung ausgewählt sein aus der Gruppe Wolfram, Platin, Palladium, Nickel, stabilisiertes Zirkonoxid und Keramik.

Das Material der Heizvorrichtung kann damit bevorzugt dem Herstellungsprozess angepasst werden. Zudem ist es vorteilhaft, die thermische Masse der Temperaturmessvorrichtung so klein wie möglich zu gestalten, um hohe Temperaturänderungen beim Auftreffen und wieder Verdampfen der Tröpfchen zu realisieren. Hier bieten sich so genannte "Hot Plate"-Strukturen an.

Weiterhin umfasst der erfindungsgemäße Dampfgütesensor wenigstens zwei Temperaturmessvorrichtungen, von denen eine dem Dampf mit Tröpfchen ausgesetzt ist und mindestens eine andere dem Dampf ohne Tröpfchen ausgesetzt ist.

Auf diese Weise ist eine sehr genaue Differenzmessung möglich. Die räumlich unterschiedliche Anordnung der Temperaturmessvorrichtungen kann dabei entweder auf der Vorder- und Rückseite des Sensorelements oder auf der gleichen Seite des Sensorelements erfolgen. Die Tröpfchen können durch geeignete Schutzrohranordnungen für mindestens eine Temperaturmessvorrichtung ausgeblendet werden.

In einer weiteren bevorzugten Ausgestaltung der vorliegenden Erfindung kann die Temperaturmessvorrichtung als Widerstandsthermometer oder als Thermoelement ausgebildet sein.

Bei Widerstandsmessungen sollte zusätzlich zwischen der Messung auf Basis eines metallischen, halbleitenden oder ionisch leitfähigen Grundmaterials unterschieden werden, wobei beide Varianten erfindungsgemäß verwendet werden können. Beispielsweise kann ein Zirkonoxid Sensormaterial durch geeignet angebrachte oberflächennahe Elektroden als Temperatursensor genutzt werden.

Ein weiterer Gegenstand der vorliegenden Erfindung ist ein Verfahren zur Detektion von Tröpfchen in einer Dampfphase, gekennzeichnet durch die Schritte
a) Bereitstellen eines Dampfgütesensors nach einem der Ansprüche 1 bis 8,
b) Erhitzen des Sensorelements durch die Heizvorrichtung auf eine Temperatur über der Dampftemperatur, gegebenenfalls
c) Modulation der Heizleistung der Heizvorrichtung mit der Zeit und
d) Bestimmen der Temperaturerniedrigung verursacht durch das Verdampfen der auftreffenden Tröpfchen.

Durch das Erhitzen des Sensorelements auf eine Temperatur über der Dampftemperatur wird vorteilhafterweise ein sofortiges Verdampfen von auftreffenden Tröpfchen aus dem Dampf erreicht. Das Verdampfen der auftreffenden Tröpfchen hat eine Temperaturerniedrigung zur Folge, die man mit der Temperaturmessvorrichtung bestimmen kann. Ist in einer Anlaufphase einer Dampfturbine oder eines Dampfturboladers, beispielsweise zur Gewinnung von Energie aus dem Abgas eines Kraftfahrzeugs, der Dampf noch mit einer Vielzahl von Tröpfchen versetzt, so wird die Temperaturmessvorrichtung kein gleichbleibendes Temperatursignal aufnehmen sondern das Signal wird durch die jeweiligen Abkühlungen nach unten ausschlagen und ein so genanntes "Zappeln" zeigen. Steigt die Dampfgüte durch immer weniger Tröpfchen an, so wird das Temperatursignal der Temperaturmessvorrichtung immer konstanter ausgebildet sein und bei Erreichen der Betriebssituation in ein relativ gleichbleibendes Signal übergehen. Damit kann eine Detektion der Anzahl von Tröpfchen im Dampf und ein Ende der Tröpfchenbeladung des Dampfs erzielt werden. Durch eine optionale Modulation der Heizleistung der Heizvorrichtung kann die Informationstiefe des Signals weiter erhöht werden, da dieses zeitlich veränderliche Signal eine Aussage über die angekoppelte thermische Masse und damit auch über das angekoppelte Wasser auf dem Sensor beinhaltet.

Ein weiterer Gegenstand der vorliegenden Erfindung ist die Verwendung eines Dampfgütesensors nach mindestens einem der Ansprüche 1 bis 8 oder eines Verfahrens nach Anspruch 9 in einem Kraftfahrzeug.

Ein erfindungsgemäßer Dampfgütesensor kann beispielsweise direkt vor einer Dampfturbine zum Einsatz kommen, wobei er an dieser Stelle hauptsächlich für die Anlaufphase des Systems interessant ist, das heißt wenn mit dem Dampf noch Tröpfchen mitgerissen werden. Er fungiert hier als Sensor zur "Tröpfchenendeerkennung". Im erreichten Betriebzustand werden im überhitzten Dampf keine Wassertröpfchen mehr erwartet.

Der Sensor kann aber auch vorteilhaft im oder nach dem Verdampfer vor dem Überhitzen eingesetzt werden. Hier kann er während der gesamten Betriebsdauer verwertbare Messdaten liefern, die mit der Kennlinie und den Betriebsparametern des Überhitzens hilfreich für die Systemsteuerung/-kontrolle des Gesamtsystems Dampfturbolader sind.

Neben einer Verwendung in der Automobiltechnik ist auch ein Einsatz in der Kraftwerkstechnik möglich.

### Zeichnungen

Nachfolgend wird die Erfindung unter Bezugnahme auf die anliegenden Zeichnungen anhand von bevorzugten Ausführungsbeispielen näher erläutert.

Es zeigen:
Figur 1 zeigt schematisch vier verschiedene mögliche Schichtenfolgen eines erfindungsgemäßen Dampfgütesensors.
Figur 2 zeigt schematisch zwei Beispiele für Schutzrohrgeometrien mit Funktionscharakter bei einem Ausführungsbeispiel eines erfindungsgemäßen Dampfgütesensors mit zwei Temperaturmessvorrichtungen.
Figur 3 zeigt zwei Ausführungsbeispiele des Dampfgütesensors der vorliegenden Erfindung mit thermisch reduzierter Masse in je einer Explosionsdarstellung und in einer Aufsicht auf den Messbereich einer Temperaturmessvorrichtung.
Figur **4** zeigt zwei weitere Aufsichten von vorteilhaften Ausgestaltungen auf den Bereich der Temperaturmessvorrichtung mit Thermoelementen.

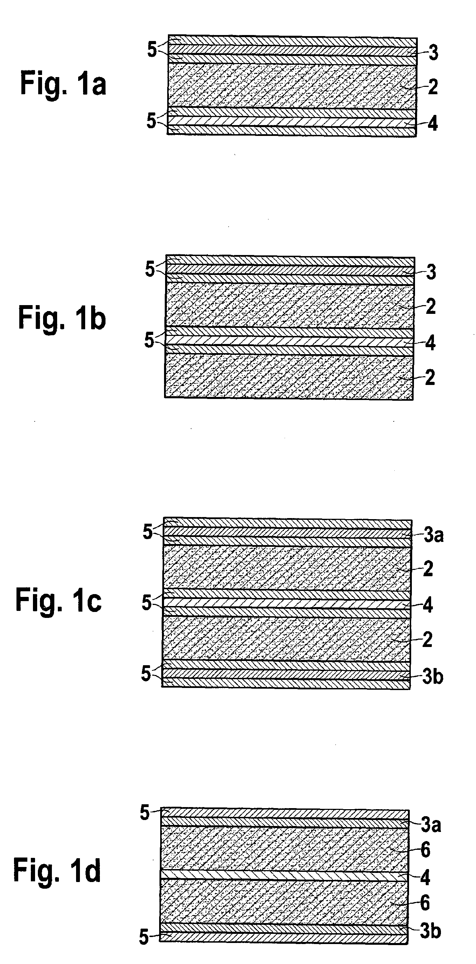

In Figur 1 werden schematisch vier verschiedene mögliche Schichtenfolgen für den Aufbau eines erfindungsgemäßen Dampfgütesensors gezeigt. In Figur 1 a) wird ein Schichtaufbau gezeigt, in dem eine Grundschicht aus einem leitfähigen Material **2** getrennt durch jeweils eine Isolationsschicht **5** eine darüber angeordnete Schicht **3** mit einer Temperaturmessvorrichtung und eine darunter angeordnete Schicht **4** mit einer Heizvorrichtung vorgesehen ist. Als äußere Schutzeinrichtung vor der Wasserdampfumgebung werden eine obere und eine untere Isolationsschicht **5** verwendet. Dadurch kann das Sensorelement vor einer Verfälschung des Messergebnisses durch den Wasserdampf geschützt werden. In Figur 1b) wird ein Aufbau eines erfindungsgemäßen Dampfgütesensors gezeigt, der zwei Grundschichten aus leitfähigem Material, wie beispielsweise yttriumdotiertes Zirkonoxid, umfasst. Zwischen den beiden Grundschichten ist durch jeweils eine Isolationsschicht **5** getrennt eine Schicht mit einer Heizvorrichtung vorgesehen. Auf der oberen Grundschicht **2** ist, ebenfalls durch eine Isolationsschicht **5** von der Grundschicht **2** getrennt, eine Schicht mit einer Temperaturmessvorrichtung **3** aufgebracht. Die obere Schicht mit der Temperaturmessvorrichtung **3** wird wiederum durch eine abdeckende Isolationsschicht **5** vom Gasraum getrennt. In Figur 1c) wird ein möglicher Aufbau eines erfindungsgemäßen Sensors mit zwei keramischen, leitfähigen Grundschichten **2** und zwei Schichten mit Temperaturmessvorrichtungen **3a** und **3b** gezeigt. Die Schicht mit der Heizvorrichtung **4** zum Erhitzen des Sensorelements auf eine Temperatur über der Dampftemperatur befindet sich bei diesem Aufbau in der Mitte zwischen den beiden Grundschichten **2** und ist von diesen durch jeweils eine Isolationsschicht **5** getrennt. Zum Abschluss und zum Schutz des Sensorelements vor dem Wasserdampf werden eine obere und eine untere Isolationsschicht **5** auf der jeweiligen Schicht mit der Temperaturmessvorrichtung **3a** und **3b** angeordnet. In Figur 1d) wird ein ähnlicher Aufbau wie in der vorhergehenden Figur 1c) gezeigt. Allerdings sind die Grundschichten aus isolierendem Grundmaterial **6,** wodurch ein vereinfachter Aufbau ohne Isolationsschichten zur den Funktionsschichten **4**, 3a und **3b** ermöglicht wird. Anstelle der gezeigten abschließenden Isolationsschichten **5** kann bei geeigneter Schutzrohrgeometrie auch auf diese außen liegenden Isolationsschichten **5** verzichtet werden, was auch für die übrigen gezeigten Aufbauten der Figuren 1a) bis 1c) gilt. Bei allen gezeigten Aufbauten ist es vorgesehen, dass Tröpfchen nur von oben auf den Sensor treffen.

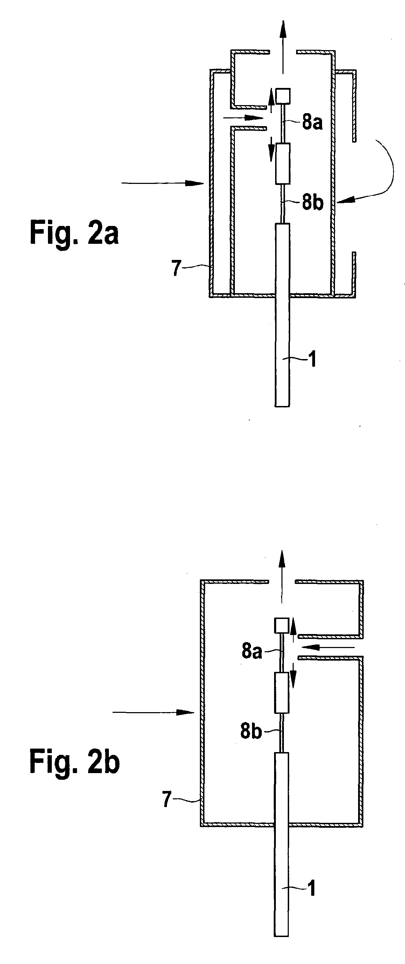

In Figur 2 werden schematisch zwei Beispiele für Schutzrohrgeometrien mit Funktionscharakter bei einem Ausführungsbeispiel eines erfindungsgemäßen Dampfgütesensors mit zwei Temperaturmessvorrichtungen gezeigt. In Figur 2 wird der Gang des Dampfstroms jeweils durch Pfeile angedeutet. Die stäbchenförmigen Sensoren **1** weisen jeweils zwei Messstellen **8** auf. Die jeweils obere Messstelle für die Temperaturmessung **8a** steht durch die Platzierung der Aussparungen in den Schutzrohren **7** direkt unter dem Einfluss der Tröpfchen im Wasserdampf. Dagegen ist durch die weitere Geometrie der Schutzrohre **7** für die unteren Messstellen **8b** ein Auftreffen von Tröpfchen ausgeblendet. Bevorzugt kann die thermische Masse im Bereich der Messstellen reduziert sein. Die reduzierte thermische Masse der Messstellen **8a** und **8b** ist durch die dünnen Bereiche des stabförmigen Sensors angedeutet. Durch die gezeigten Ausgestaltungen des erfindungsgemäßen Dampfgütesensors kann vorteilhaft eine Differenzmessung zwischen der Messstelle mit auftreffenden Tröpfchen und der Messstelle ohne auftreffende Tröpfchen vorgenommen werden, wodurch die Genauigkeit der Messung erhöht werden kann. Durch diese Art der Strömungslenkung durch das Schutzrohr **7** können große Tröpfchen zum Schutz des Sensorelements ausgeblendet werden. Sollen diese mit erfasst werden, so sollte die Anströmung im Falle der Figur 2b) direkt von rechts kommen (direkte Anströmung). Das Schutzrohr **7** in Figur 2a) ist für diesen letzten Fall ungeeignet, da große Tröpfchen der Strömungsführung nicht folgen können.

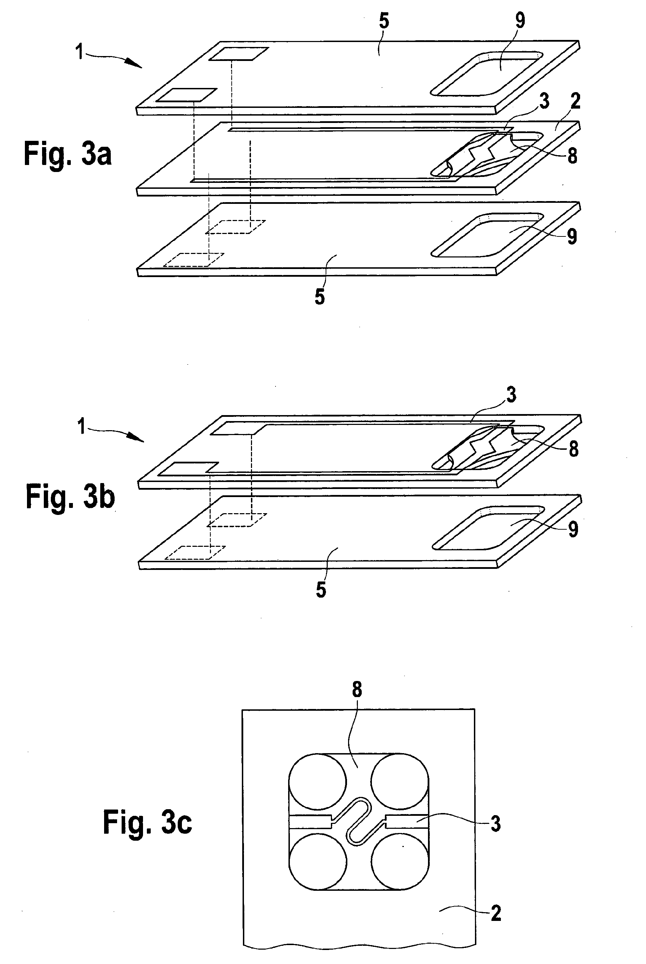

In Figur 3 werden zwei Ausführungsbeispiele des Dampfgütesensors der vorliegenden Erfindung mit thermisch reduzierter Masse in je einer Explosionsdarstellung und in einer Aufsicht auf die Messstelle einer Temperaturmessvorrichtung gezeigt. Figur 3a) zeigt einen dreischichtigen Aufbau eines erfindungsgemäßen Sensors mit einer oberen und einer unteren Isolationsschicht **5** sowie einer keramischen Grundschicht **2.** An der Oberseite der keramischen Grundschicht **2** befindet sich eine Temperaturmessvorrichtung **3** mit einer Messstelle **8**. Durch Aussparungen und Ausfräsungen zur Redzierung der thermischen Masse wird eine genauere Messung ermöglicht, weil ein auftreffendes und wieder verdampfendes Tröpfchen weniger Masse abkühlen muss. Dadurch wird insgesamt die Sensitivität der Messstelle erhöht. An der Unterseite der Grundschicht **2** ist eine Heizvorrichtung vorgesehen (nicht gezeigt), die das gesamte Sensorelement auf eine Temperatur über der Dampftemperatur erhitzt und so die Verdampfung der auftreffenden Tröpfchen erzielt.

Die beiden Isolationsschichten **5** weisen im Bereich der Messstelle **8** jeweils Aussparungen **9** auf, die den Zugang für Tröpfchen zur Messstelle ermöglichen. In Figur 3b) wird ein vereinfachter, zweilagiger Aufbau dargestellt, in dem die obere Isolationsschicht im Vergleich zur vorhergehenden Figur 3a) weggelassen ist. Figur 3c) zeigt in einer Aufsicht den Bereich der Messstelle **8** in der Grundschicht **2.** Die Temperaturmessvorrichtung **3** wird auf einem durch Aussparungen und Materialreduzierung durch Ausfräsungen in der Schicht separaten Bereich vorgesehen. Auf diese Weise wird die thermische Masse im Messstellenbereich reduziert, so dass die Abkühlung durch das Verdampfen der auftreffenden Tröpfchen genauer ermittelt werden kann.

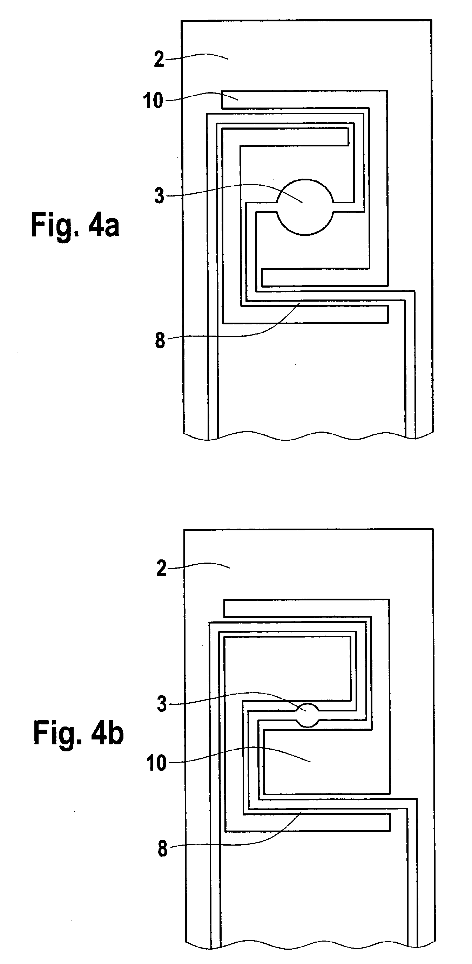

Dieses Prinzip ist auch in Figur 4 dargestellt. Hier sind weiteren Geometrien zur möglichen Ausgestaltung der Messstellen dargestellt. Durch die gebogenen Strukturen der Trägerkeramik **2** im Messstellenbereich **8**, die durch die weiträumigen Aussparungen **10** erzielt wird, kann zusätzlich in vorteilhafter Weise eine Reduktion der thermomechanischen Spannungen erreicht werden. Als Temperaturmessvorrichtung ist in beiden Abbildungen 4a) und 4b) jeweils ein Thermoelement **3** vorgesehen.

## Patentansprüche

1. Dampfgütesensor zur Detektion von Tröpfchen in einer Dampfphase enthaltend ein keramisches Sensorelement (1) mit einer ersten Temperaturmessvorrichtung (3) und mindestens einer Heizvorrichtung (4), wobei das keramische Sensorelement durch die Heizvorrichtung über die Dampftemperatur der zu detektierenden Tröpfchen_erhitzbar ist, um ein sofortiges Verdampfen von auftreffenden Tröpfchen aus dem Dampf zu erreichen, wobei mittels des Temperatursignals eine Detektion der Anzahl der Tröpfchen im Dampf und ein Ende der Tröpfchenbeladung des Dampfes erzielbar ist, **dadurch gekennzeichnet, dass** der Dampfgütesensor wenigstens zwei Temperaturmessvorrichtungen umfasst, wobei die Temperaturmessvorrichtungen entweder auf der Vorder- und Rückseite des Sensorelements oder auf der gleichen Seite des Sensorelements angeordnet sind, so dass eine dem Dampf mit Tröpfchen ausgesetzt ist und mindestens eine andere dem Dampf ohne Tröpfchen ausgesetzt ist.

2. Dampfgütesensor nach Anspruch 1, **dadurch gekennzeichnet, dass** das keramische Sensorelement eine Schichtstruktur aufweist.

3. Dampfgütesensor nach Anspruch 1 oder 2, **dadurch gekennzeichnet, dass** die Temperaturmesseinrichtung sich an der Oberfläche des Sensorelements befindet.

4. Dampfgütesensor nach mindestens einem der vorhergehenden Ansprüche, **dadurch gekennzeichnet, dass** das keramische Sensorelement aus einem hochtemperaturstabilen und hydrothermal beständigen Material besteht.

5. Dampfgütesensor nach Anspruch 4, **dadurch gekennzeichnet, dass** das Material ausgewählt ist aus der Gruppe der Silikate, Aluminiumoxid, Siliziumcarbid, Quarzglas, Siliziumnitird, Aluminiumnitrid, Zirkonoxid und LTCC.

6. Dampfgütesensor nach mindestens einem der vorhergehenden Ansprüche, **dadurch gekennzeichnet, dass** die Heizvorrichtung gegenüber dem keramischen Sensorelement elektrisch isoliert ist und die elektrische Isolation durch Umschließen der Heizvorrichtung mit Aluminiumoxid erzielt wird.

7. Dampfgütesensor nach mindestens einem der vorhergehenden Ansprüche, **dadurch gekennzeichnet, dass** das Material der Heizvorrichtung ausgewählt ist aus der Gruppe Wolfram, Platin, Palladium, Nickel, stabilisiertes Zirkonoxid und Keramik.

8. Dampfgütesensor nach mindestens einem der vorhergehenden Ansprüche, **dadurch gekennzeichnet, dass** die Temperaturmessvorrichtung als Widerstandsthermometer oder als Thermoelement ausgebildet ist.

9. Verfahren zur Detektion von Tröpfchen in einem Dampf, **gekennzeichnet durch** die Schritte
a) Bereitstellen eines Dampfgütesensors nach einem der Ansprüche 1 bis 8,
b) Erhitzen des Sensorelements **durch** die Heizvorrichtung auf eine Temperatur über der Dampftemperatur, gegebenenfalls
c) Modulation der Heizleistung der Heizvorrichtung mit der Zeit und
d) Bestimmen der Temperaturerniedrigung verursacht **durch** das Verdampfen der auftreffenden Tröpfchen.

10. Verwendung eines Dampfgütesensors nach mindestens einem der Ansprüche 1 bis 8 oder eines Verfahrens nach Anspruch 9 in einem Kraftfahrzeug oder einem Kraftwerk.

## Claims

1. Vapour quality sensor for detecting droplets in a vapour phase containing a ceramic sensor element (1) with a first temperature measurement device (3) and at least one heating device (4), wherein the ceramic sensor element can be heated by the heating device to above the vapour temperature of the droplets to be detected, in order to achieve instant vaporization of droplets incident thereon from the vapour, wherein the number of droplets in the vapour can be detected by means of the temperature signal and an end of the droplet load in the vapour can be achieved, **characterized in that** the vapour quality sensor comprises at least two temperature measurement devices, wherein the temperature measurement devices are arranged either on the front or the rear side of the sensor element or on the same side of the sensor element, such that one is exposed to the vapour with droplets and at least one other is exposed to the vapour without droplets.

2. Vapour quality sensor according to Claim 1, **characterized in that** the ceramic sensor element has a layered structure.

3. Vapour quality sensor according to Claim 1 or 2, **characterized in that** the temperature measurement device is located on the surface of the sensor element.

4. Vapour quality sensor according to at least one of the preceding claims, **characterized in that** the ceramic sensor element is made from a material which is stable at high temperatures and is hydrothermally resistant.

5. Vapour quality sensor according to Claim 4, **characterized in that** the material is selected from the group of the silicates, aluminium oxide, silicon carbide, quartz glass, silicon nitride, aluminium nitride, zirconium oxide and LTCC.

6. Vapour quality sensor according to at least one of the preceding claims, **characterized in that** the heating device is electrically insulated with respect to the ceramic sensor element and the electrical insulation is obtained by enclosing the heating device with aluminium oxide.

7. Vapour quality sensor according to at least one of the preceding claims, **characterized in that** the material of the heating device is selected from the group of tungsten, platinum, palladium, nickel, stabilized zirconium oxide and ceramic.

8. Vapour quality sensor according to at least one of the preceding claims, **characterized in that** the temperature measurement device is formed as a resistance thermometer or as a thermocouple.

9. Method for detecting droplets in a vapour, **characterized by** the steps of:
a) providing a vapour quality sensor according to one of Claims 1 to 8,
b) heating the sensor element by means of the heating device to a temperature above the vapour temperature, optionally
c) modulating the heating power of the heating device over time and
d) determining the temperature drop caused by vaporizing the incident droplets.

10. Use, in a motor vehicle or a power plant, of a vapour quality sensor according to at least one of Claims 1 to 8 or of a method according to Claim 9.

## Revendications

1. Capteur de qualité de vapeur pour détecter des gouttelettes dans une phase vapeur, et contenant un élément de capteur céramique (1), avec un premier dispositif de mesure de température (3) et au moins un dispositif de chauffage (4), l'élément de capteur céramique pouvant être chauffé par le dispositif de chauffage au-dessus de la température d'évaporation des gouttelettes à détecter, afin d'obtenir une évaporation immédiate hors de la vapeur de gouttelettes formées, une détection du nombre de gouttelettes dans la vapeur et la fin d'une charge en gouttelettes de la vapeur pouvant être obtenues au moyen du signal de température, **caractérisé en ce que** le capteur de qualité de vapeur comprend au moins deux dispositifs de mesure de température, les dispositifs de mesure de température étant disposés soit sur le côté avant et le côté arrière de l'élément de capteur soit du même côté de l'élément de capteur, de sorte que l'un soit exposé à la vapeur contenant des gouttelettes et au moins un autre soit exposé à la vapeur sans gouttelettes.

2. Capteur de qualité de vapeur selon la revendication 1, **caractérisé en ce que** l'élément de capteur céramique présente une structure stratifiée.

3. Capteur de qualité de vapeur selon la revendication 1 ou 2, **caractérisé en ce que** le dispositif de mesure de température se trouve à la surface de l'élément de capteur.

4. Capteur de qualité de vapeur selon au moins l'une quelconque des revendications précédentes, **caractérisé en ce que** l'élément de capteur céramique se compose d'un matériau stable à haute température et hydrothermiquement résistant.

5. Capteur de qualité de vapeur selon la revendication 4, **caractérisé en ce que** le matériau est choisi parmi le groupe des silicates, de l'oxyde d'aluminium, du carbure de silicium, du verre de quartz, du nitrure de silicium, du nitrure d'aluminium, de l'oxyde de zirconium et du LTCC.

6. Capteur de qualité de vapeur selon au moins l'une quelconque des revendications précédentes, **caractérisé en ce que** le dispositif de chauffage est isolé électriquement par rapport à l'élément de capteur céramique et l'isolation électrique est obtenue en entourant le dispositif de chauffage avec de l'oxyde d'aluminium.

7. Capteur de qualité de vapeur selon au moins l'une quelconque des revendications précédentes, **caractérisé en ce que** le matériau du dispositif de chauffage est choisi parmi le groupe du tungstène, du platine, du palladium, du nickel, de l'oxyde de zirconium stabilisé et de la céramique.

8. Capteur de qualité de vapeur selon au moins l'une quelconque des revendications précédentes, **caractérisé en ce que** le dispositif de mesure de température est réalisé sous forme de thermomètre à résistance ou sous forme de thermoélément.

9. Procédé de détection de gouttelettes dans une vapeur, **caractérisé par** les étapes suivantes :
a) fourniture d'un capteur de qualité de vapeur selon l'une quelconque des revendications 1 à 8,
b) chauffage de l'élément de capteur par le dispositif de chauffage à une température au-dessus de la température d'évaporation, éventuellement
c) modulation de la puissance de chauffage du dispositif de chauffage en fonction du temps et
d) détermination de la réduction de température provoquée par l'évaporation des gouttelettes formées.

10. Utilisation d'un capteur de qualité de vapeur selon au moins l'une quelconque des revendications 1 à 8, ou d'un procédé selon la revendication 9, dans un véhicule automobile ou une centrale.
